# EUROPÄISCHE PATENTANMELDUNG

(11) **EP 4 763 786 A1**
(43) Veröffentlichungstag der Anmeldung: **24.06.2026**
(21) Anmeldenummer: 25224260.7
(22) Anmeldetag: 17.12.2025
(51) Int. Cl.: B66C 1/10, B66C 1/42, F24S 25/613, B66C 1/62

(54) **LASTTRAGEVORRICHTUNG ZUM HEBEN VON PHOTOVOLTAIKMODULEN**

(30) Priorität: 19.12.2024 LU 509436
(71) Anmelder: MHN-Montage-Handwerk-Nalbach S.à r.l, 5550 Remich (LU)
(72) Erfinder: Nalbach, Hendrick, 66809 Nalbach (DE)
(74) Vertreter: Aronova

(57) **Zusammenfassung**

Eine Hebehilfe (10) zum Heben von Photovoltaikmodulen (28) umfasst ein Traggestell (12), mit einem ersten und einem zweiten Profilteil (14, 16). Das erste Profilteil (14) umfasst ein Unterteil (14c) und ein Oberteil (14a). An letzterem sind eine erste und eine zweite Öse (18) zum Befestigen von Anschlagmitteln einander bezüglich der Profilmitte in Längsausdehnungsrichtung gegenüberliegend angeordnet. Das zweite Profilteil (16) erstreckt sich längs des ersten Profilteils und ist mit diesem an dessen Unterteil so verbunden, dass zwischen gegenüberliegenden im Wesentlichen parallelen Flächen des ersten und des zweiten Profilteils ein nach oben und zu den in Längsausdehnungsrichtung liegenden Seiten hin offener Zwischenraum (22) ausgebildet ist, in welchen ein Teil (30) eines rückseitigen Rahmens eines PV-Moduls (28) eingehängt werden kann.

## Beschreibung

### Gebiet der Erfindung

Die Erfindung liegt auf dem Gebiet von Lastgreif- oder Lasttragevorrichtungen für Hebezeug, beispielsweise für Kräne, Haspeln, Winden oder Flaschenzüge, und betrifft insbesondere eine Lasttragevorrichtung zum Übertragen von Tragkräften vom einem Anschlagmittel (wie z.B. Seile, Kabel, Ketten, Hebebänder, Hebegurtschlingen, Rundschlingen, usw.) auf einen zu tragenden Gegenstand.

### Hintergrund der Erfindung

Die Installation von Photovoltaikmodulen (PV-Modulen) an oder auf Gebäuden ist meist Handarbeit. Dabei werden die PV-Module (auch bezeichnet als PV-Paneele) in den allermeisten Fällen in der Höhe, beispielsweise auf Dächern, an Balkonen oder an Fassaden installiert. Es ist daher notwendig die PV-Module nach ihrer Anlieferung an der Baustelle in die Höhe zu transportieren. Wenn kein Kran oder Lastenaufzug vorhanden ist, was auf kleineren Baustellen, wie z.B. bei Installationsarbeiten an oder auf Bestandsimmobilien, häufig der Fall ist, müssen die PV-Module oft einzeln von den Arbeitern in die Höhe gehievt oder über Treppen oder Leitern nach oben getragen werden. Ein solches Vorgehen ist zeitaufwändig, arbeitsintensiv und darüber hinaus auch mit Gefahren für die Arbeiter und dem Risiko der Beschädigung des Materials verbunden.

Aus dem Gebrauchsmuster CN216272789U ist eine Behelfshebevorrichtung für Solar- oder Photovoltaik-Paneele bekannt. Die Hebevorrichtung umfasst eine Stützbasis, eine elektrische Teleskopstange, die an der Oberseite der Stützbasis angeordnet ist, einen Schwenkmechanismus, der zwischen der elektrischen Teleskopstange und der Stützbasis angeordnet ist, und einen Ausleger, der fest mit dem elektrischen Teleskopende an der Oberseite der elektrischen Teleskopstange verbunden ist. Die Paneele werden dabei an der Unterseite einer Trageplattform eingeklemmt und liegend transportiert.

Das Gebrauchsmuster CN217627159U beschreibt eine einfachere Hebevorrichtung für ein Photovoltaikpanel. Die Hebevorrichtung umfasst mehrere Klemmen mit Heberingen, welche an den Kanten des PV-Paneels angeordnet werden und es erlauben, ein Seil oder ein Hebeband an dem PV-Paneel zu befestigen.

Die internationale Patentanmeldung WO 2014/057708A1 beschreibt einen Heberahmen für ein Photovoltaikmodul mit zwei Hohlprofilen mit je zwei oberseitig daran angeordneten Ösen zum Befestigen von Anschlagmitteln. Die Hohlprofile werden parallel zu einander auf einem Photovoltaikmodul angeordnet. Dann werden an beiden Enden jedes Hohlprofils Halterungen angebracht, die das Photovoltaikmodul an seinem Rand umgreifen. Die Halterungen weisen jeweils ein Befestigungsteil auf, welches teleskopartig in das Hohlprofil eingeführt wird und ein dazu beabstandetes Trageteil, welches das Photovoltaikmodul beim Heben trägt.

Die bekannten Lösungen sind kompliziert in der Handhabung, was nur eine geringe Zeitersparnis zur Folge hat.

### Allgemeine Beschreibung

Eine erfindungsgemäße Hebehilfe zum Heben von Photovoltaikmodulen umfasst ein Traggestell, mit einem ersten und einem zweiten Profilteil. Das erste Profilteil umfasst ein Unterteil und ein Oberteil. An letzterem sind eine erste und eine zweite Öse zum Befestigen von Anschlagmitteln einander bezüglich der Profilmitte in Längsausdehnungsrichtung gegenüberliegend angeordnet. Das zweite Profilteil erstreckt sich längs des ersten Profilteils und ist mit diesem an dessen Unterteil so verbunden, dass zwischen gegenüberliegenden im Wesentlichen parallelen Flächen des ersten und des zweiten Profilteils ein nach oben und zu den in Längsausdehnungsrichtung liegenden Seiten hin offener Zwischenraum ausgebildet ist, in welchen ein Teil eines rückseitigen Rahmens eines PV-Moduls eingehängt werden kann.

Die Hebehilfe erlaubt das einfache und schnelle Einhängen eines PV-Moduls mit nur wenigen Handgriffen. Wenn das PV-Moduls eingehängt ist, kann es einfach mit Hilfe eines Seils und einer Umlenkrolle entlang einem Gerüst sicher nach oben gezogen werden.

Das erste Profilteil kann ein Z-Profil umfassen, wobei jeweils ein Seitenteil des Z-Profils das Unterteil, beziehungsweise das Oberteil ausbildet, und wobei das Mittelteil des Z-Profils den Zwischenraum zu einer Seite hin begrenzt. Gemäß einer anderen Ausgestaltung kann das erste Profilteil ein L-Profil umfassen, wobei einer der Schenkel das Unterteil ausbildet und der andere Schenkel das Oberteil ausbildet und auch den Zwischenraum zu einer Seite hin begrenzt.

Das zweite Profilteil kann eine im Wesentlichen rechtwinklig zum Zwischenraum verlaufende Oberseite aufweisen. Diese Oberseite hat vorzugsweise quer zur Längsausdehnungsrichtung eine Breite, welche es erlaubt, den rückseitigen Rahmen des Photovoltaikmoduls zu hintergreifen. Gemäß einer Ausgestaltungsform beträgt die Breite 15 bis 30 mm, bevorzugt 18 bis 25 mm. Besonders bevorzugt wird eine Breite von 18 mm.

Wenn ein PV-Modul in die Hebehilfe eingehängt ist, liegt es entweder an der unteren Begrenzung des Zwischenraums auf und/oder an der Oberseite des zweiten Profilteils, je nachdem ob die Höhe des Zwischenraums kleiner oder größer ist als die Höhe des Rahmenteils des PV-Moduls, welches in den Zwischenraum eingeführt ist.

Das zweite Profilteil kann ein Vierkantrohrprofil umfassen, welches an dem Unterteil des ersten Profilteils befestigt ist. Alternativ könnte das zweite Profilteil ein U-Profil umfassen, welches mit seinem Mittelsteg oder einem der Schenkel den Zwischenraum zu einer Seite hin begrenzt.

Die im Wesentlichen parallelen Flächen des ersten und des zweiten Profilteils liegen sich vorzugsweise in einem Abstand von 2 bis 5 mm, noch bevorzugter in einem Abstand von 2,5 bis 3,5 mm, gegenüber. Besonders bevorzugt wird ein Abstand von 3 mm. Die Tiefe des Zwischenraums beträgt vorzugsweise zwischen 25 mm und 40 mm, und besonders bevorzugt 30 mm.

Gemäß einer Ausgestaltung misst das erste Profilteil in Längsausdehnungsrichtung zwischen 80 und 120 cm, z.B. zwischen 90 und 110 cm. Besonders bevorzugt wird eine Länge von 90 cm.

Das zweite Profilteil kann sich entlang der gesamten Länge des ersten Profilteils erstrecken. Das zweite Profilteil könnte jedoch auch kürzer ausfallen und/oder mehrere voneinander getrennte auf einer Linie angeordnete Abschnitte umfassen.

Die erste und die zweite Öse können als Ringschrauben ausgestaltet sein. Diese können am Oberteil des ersten Profilteils angeschraubt sein.

Beim ersten und/oder beim zweiten Profilteil kann es sich um Kunststoffprofilteile handeln. Bevorzugt werden jedoch Profilteile aus Metall, beispielsweise aus Stahl oder Aluminium. Stranggussprofile aus Aluminium werden als besonders geeignet angesehen.

Das erste und das zweite Profilteil können aus einem Stück geformt sein. Alternativ können das erste und das zweite Profilteil unterschiedliche Profile sein, welche miteinander verbunden sind, z.B. mittels Schrauben-, Nieten- oder Schweißverbindungen.

Die Hebehilfe kann weiter eine Arretiervorrichtung zum Sichern eines eingehängten Photovoltaikmoduls umfassen. Die Arretiervorrichtung kann mittig zwischen den Ösen am Oberteil des ersten Profilteils angeordnet sein. Die Arretiervorrichtung kann einen Riegel umfassen, z.B. einen Schieberiegel, einen Bolzenriegel, einen Drehriegel, einen Rastriegel, einen Türriegel mit Drehknauf, ein Schloss, oder Ähnliches.

Gemäß einer bevorzugten Ausführungsform umfasst die Hebehilfe ein Aluminiumprofil mit Z-förmigem Querschnitt, mit einem Mittelteil, einem ersten Seitenteil als Oberteil und einem zweiten Seitenteil als Unterteil. Am ersten Seitenteil des Aluminiumprofils sind zwei Rundschrauben als Ösen einander bezüglich der Profilmitte gegenüberliegend angeordnet. Am zweiten Seitenteil ist ein zweites Aluminiumprofil in Form eines Vierkantrohrs befestigt, so dass sich zwischen diesem und dem Mittelteil des Z-förmigen Aluminiumprofils ein Zwischenraum befindet. Eine Arretiervorrichtung mit einem Riegel ist am ersten Seitenteil des Z-förmigen Aluminiumprofils mittig zwischen den Ösen befestigt. Die Höhe des Mittelteils des Z-förmigen Aluminiumprofils ist etwas größer als die Höhe des Vierkantrohrs, so dass der Riegel der Arretiervorrichtung über den Zwischenraum geschoben werden kann. Die beiden Aluminiumprofile mit Ösen und Arretiervorrichtung bilden zusammen das Traggestell, welches an der Rückseite eines PV-Moduls so eingeklemmt werden kann, dass, wobei ein Teil des rückseitigen Rahmens des PV-Moduls in den Zwischenraum zu liegen kommt. Dann kann das eingehängte PV-Modul durch Vorschieben des Riegels zusätzlich gesichert werden.

In der vorliegenden Beschreibung nehmen Angaben zur räumlichen Anordnung, wie z.B. "oben", "unten", sowie davon abgeleitete Ausdrücke, wie z.B. "Oberteil" und "Unterteil", Bezug auf die Orientierung der Hebehilfe während ihrer bestimmungsgemäßen Benutzung. Diese Konvention soll der Verständlichkeit und der Einheitlichkeit der verwendeten Begriffe dienen und keinesfalls so verstanden werden, dass die Hebehilfe nur in dieser besonderen Orientierung unter Schutz gestellt wird.

### Kurze Erläuterung der Zeichnungen

Ein bevorzugtes, die Erfindung nicht einschränkendes Ausführungsbeispiel einer erfindungsgemäßen Hebehilfe wird nachstehend anhand der folgenden Zeichnungen beschrieben. In den Zeichnungen zeigen:
- Fig. 1:: eine Seitenansicht einer Ausführungsform einer erfindungsgemäßen Hebehilfe;
- Fig. 2:: einen Querschnitt der Hebehilfe der Fig. 1;
- Fig. 3:: einen Querschnitt der der Hebehilfe mit eingehängtem PV-Modul.

### Detaillierte Beschreibung eines Ausführungsbeispiels der Erfindung

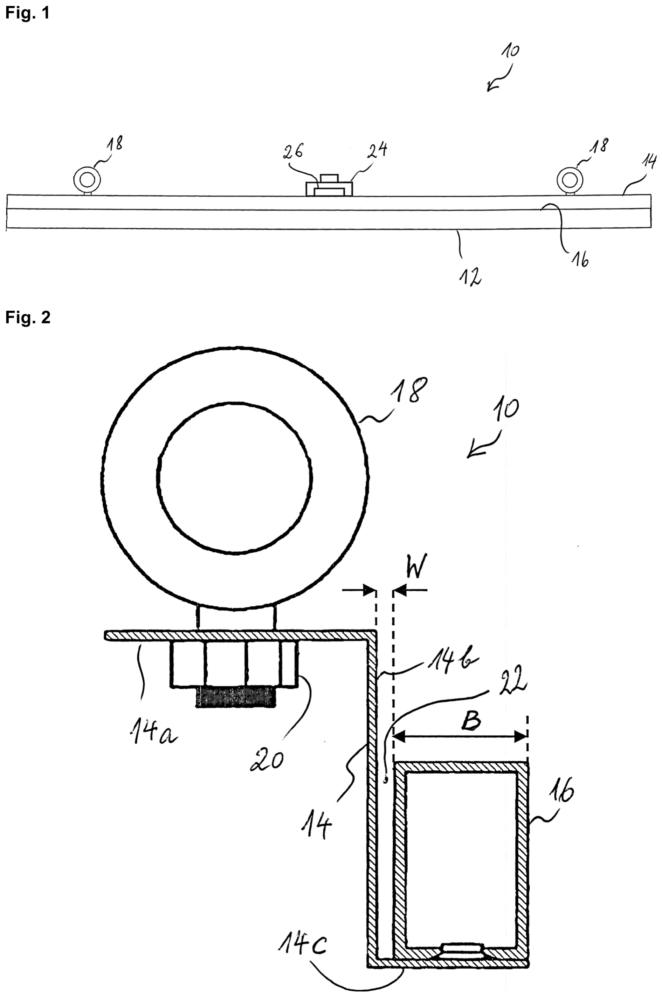

Die Fig. 1 bis 3 zeigen eine bevorzugte Ausführungsform einer Hebehilfe 10 zum Heben von PV-Modulen.

Die Hebehilfe 10 umfasst ein Traggestell 12, mit einem ersten 14 und einem zweiten 16 Profilteil. Das erste Profilteil 14 ist ein Profil (z.B. aus Aluminium) mit Z-förmigem Querschnitt und umfasst ein Mittelteil 14b, ein erstes Seitenteil 14a als Oberteil und ein zweites Seitenteil 14c als Unterteil. Am ersten Seitenteil 14a sind zwei Rundschrauben 18 einander symmetrisch bezüglich der Profilmitte gegenüberliegend angeordnet. Die Rundschrauben 18 sind in Löcher des ersten Seitenteils 14a eingeführt und an der anderen Seite mit einer Schraubmutter 20 befestigt. Die Rundschrauben 18 dienen zum Befestigen eines Seils, Kabels, Gurtbandes oder eines anderen Anschlagmittels.

Das zweite Profil 16 ist ein Vierkantrohr (z.B. aus Aluminium) und am zweiten Seitenteil 14b des ersten Profils 14 befestigt, so dass sich zwischen den sich gegenüberliegenden Seitenflächen des Vierkantrohrprofils 16 und des Mittelteils 14b ein Zwischenraum 22 ausgebildet ist.

Am ersten Seitenteil 14a des Z-förmigen Profils 14 ist mittig zwischen den Ösen eine Arretiervorrichtung 24 mit einem Riegel 26 angebracht. Durch Vorschieben des Riegels 26 über den Rand des Mittelteils 14b hinaus in die (gedachte) Verlängerung des Zwischenraums 22 kann ein eingehängtes PV-Modul zusätzlich gegen das Herausfallen gesichert werden.

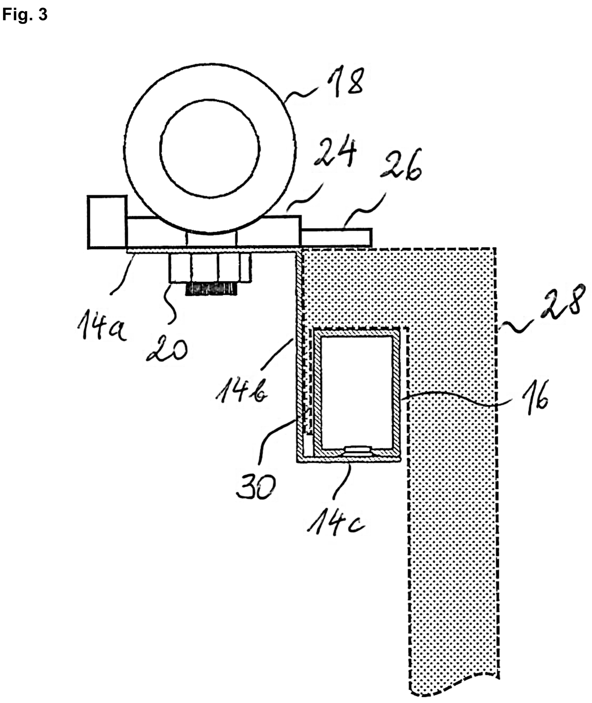

In der Fig. 3 ist schematisch angedeutet, wie ein PV-Modul 28 in das Traggestell 12 der Hebehilfe 10 eingehängt und gesichert werden kann. An der Rückseite von gängigen PV-Modulen befindet sich ein Rahmen mit einem nach innen gerichteten Flanschblech 30. Die Breite W des Zwischenraums 22, die Breite B des Vierkantrohrprofils 16 und die Länge des Traggestells 14 sind so gewählt, dass der Zwischenraum 22 das Flanschblech 30 aufnehmen und das Vierkantrohrprofil 16 gleichzeitig das Flanschblech 30 hintergreifen kann. Das eingehängte PV-Modul 28 liegt vorzugsweise auf der Oberseite des Vierkantrohrprofils 16 auf. Dazu wird die Höhe des Vierkantrohrprofils 16 größer als der Überhang des Flanschblechs 30 gewählt. Die Wahl W = 3 mm, B = 18 mm, Länge des Traggestells = 90 cm, Höhe des Vierkantrohrprofils = 30 mm hat sich als geeignet für alle handelsüblichen PV-Module erwiesen.

Die Höhe des Mittelteils 14b des Z-förmigen Profils 14 ist etwas größer als die Höhe des Vierkantrohrprofils 16, so dass der Riegel 26 der Arretiervorrichtung 42 bei eingehängtem PV-Modul 28 über dessen Rand geschoben werden kann, wodurch das PV-Modul zusätzlich gegen das Herausfallen gesichert wird.

Wenngleich spezifische Ausführungsformen im Detail besprochen wurden, werden sachkundige Leser ohne Weiteres erkennen, dass, ausgehend von den hierin beschriebenen Ausführungsformen, alternative und abgewandelte Ausführungsformen entwickelt werden können. Die hierin beschriebenen Ausführungsformen sollen daher nur der Veranschaulichung der Erfindung dienen und sind nicht so zu verstehen, dass sie den Umfang dieser Erfindung einschränken, insbesondere nicht den Schutzumfang der nachfolgenden Patentansprüche inklusive ihres Äquivalenzbereichs.

## Patentansprüche

1. Eine Hebehilfe (10) zum Heben von Photovoltaikmodulen (28), umfassend ein Traggestell (12), aufweisend
• ein erstes Profilteil (14) mit einem Unterteil (14c) und einem Oberteil (14a), an welchem eine erste und eine zweite Öse (18) zum Befestigen von Anschlagmitteln einander bezüglich der Profilmitte in Längsausdehnungsrichtung gegenüberliegend angeordnet sind,
• ein zweites Profilteil (16), welches sich längs des ersten Profilteils erstreckt und mit diesem an dessen Unterteil verbunden ist,
**dadurch gekennzeichnet, dass** das zweite Profilteil (16) mit dem ersten Profilteil an dessen Unterteil so verbunden ist, dass zwischen gegenüberliegenden im Wesentlichen parallelen Flächen des ersten und des zweiten Profilteils ein nach oben und zu den in Längsausdehnungsrichtung liegenden Seiten hin offener Zwischenraum (22) ausgebildet ist, in welchen ein Teil (30) eines rückseitigen Rahmens eines Photovoltaikmoduls (28) eingehängt werden kann.

2. Die Hebehilfe nach Anspruch 1, wobei das erste Profilteil ein Z-Profil umfasst, wobei jeweils ein Seitenteil des Z-Profils das Unterteil (14c) und das Oberteil (14a) ausbildet, und wobei das Mittelteil (14b) des Z-Profils den Zwischenraum (22) zu einer Seite hin begrenzt.

3. Die Hebehilfe nach Anspruch 1 oder 2, wobei das zweite Profilteil eine im Wesentlichen rechtwinklig zum Zwischenraum verlaufende Oberseite aufweist.

4. Die Hebehilfe nach Anspruch 3, wobei die Oberseite quer zur Längsausdehnungsrichtung eine Breite (B) von 15 bis 30 mm, bevorzugt von 18 bis 25 mm, aufweist.

5. Die Hebehilfe nach Anspruch 3 oder 4, wobei das zweite Profilteil (16) ein Vierkantrohrprofil umfasst, welches an dem Unterteil des ersten Profilteils befestigt ist.

6. Die Hebehilfe nach irgendeinem der Ansprüche 1 bis 5, wobei die im Wesentlichen parallelen Flächen des ersten und des zweiten Profilteils sich in einem Abstand (W) von 2 bis 5 mm, bevorzugt in einem Abstand von 2,5 bis 3,5 mm gegenüberliegen.

7. Die Hebehilfe nach irgendeinem der Ansprüche 1 bis 6, wobei das erste Profilteil in Längsausdehnungsrichtung zwischen 80 und 120 cm, bevorzugt zwischen 90 und 110 cm, misst.

8. Die Hebehilfe nach irgendeinem der Ansprüche 1 bis 7, wobei das sich das zweite Profilteil entlang der gesamten Länge des ersten Profilteils erstreckt.

9. Die Hebehilfe nach irgendeinem der Ansprüche 1 bis 7, wobei die erste und die zweite Öse (18) als Ringschrauben ausgestaltet sind.

10. Die Hebehilfe nach irgendeinem der Ansprüche 1 bis 9, wobei das erste und das zweite Profilteil aus einem Stück geformt sind.

11. Die Hebehilfe nach irgendeinem der Ansprüche 1 bis 9, wobei das erste und das zweite Profilteil unterschiedliche Profile sind, welche miteinander verbunden sind, z.B. mittels Schrauben-, Nieten- oder Schweißverbindungen.

12. Die Hebehilfe nach irgendeinem der Ansprüche 1 bis 11, wobei das erste und das zweite Profilteil aus Aluminium bestehen.

13. Die Hebehilfe nach irgendeinem der Ansprüche 1 bis 12, weiter umfassend eine Arretiervorrichtung (24) zum Sichern eines eingehängten Photovoltaikmoduls (28).

14. Die Hebehilfe nach Anspruch 13, wobei die Arretiervorrichtung mittig zwischen den Ösen am Oberteil des ersten Profilteils angeordnet ist.

15. Die Hebehilfe nach Anspruch 13 oder 14, wobei die Arretiervorrichtung einen Riegel (26) umfasst.
